# EUROPÄISCHE PATENTSCHRIFT

(11) **EP 2 445 792 B1**
(45) Veröffentlichungstag und Bekanntmachung des Hinweises auf die Patenterteilung: **06.08.2014**
(21) Anmeldenummer: 10724307.3
(22) Anmeldetag: 08.06.2010
(51) Int. Cl.: B64D 13/06, B64D 13/00, F25D 17/02

(54) **VERFAHREN ZUM BETREIBEN EINES FLUGZEUGKÜHLSYSTEMS UND FLUGZEUGKÜHLSYSTEM**
METHOD FOR OPERATING AN AIRCRAFT COOLING SYSTEM, AND AIRCRAFT COOLING SYSTEM
PROCÉDÉ POUR OPÉRER UN SYSTÈME DE REFROIDISSEMENT D'AÉRONEF ET SYSTÈME DE REFROIDISSEMENT D'AÉRONEF

(30) Priorität: 26.06.2009 DE 102009030743; 26.06.2009 US 220612 P
(43) Veröffentlichungstag der Anmeldung: 02.05.2012
(73) Patentinhaber: Airbus Operations GmbH, 21129 Hamburg (DE)
(72) Erfinder: TRUEMPER, Torsten, 21129 Hamburg (DE)
(74) Vertreter: Schicker, Silvia
(86) Internationale Anmeldenummer: PCT/EP2010/003431
(87) Internationale Veröffentlichungsnummer: WO 2010/149267

(56) Entgegenhaltungen:
- EP-A2- 1 715 263
- WO-A1-2005/063578
- DE-B3-102006 005 035
- US-A1- 2005 210 910
- US-A1- 2009 090 116

## Beschreibung

Die Erfindung betrifft ein Verfahren zum Betreiben eines Flugzeugkühlsystems sowie ein Flugzeugkühlsystem, wobei es sich bei dem Flugzeugkühlsystem insbesondere um ein Flugzeugflüssigkeitskühlsystem handelt.

In modernen Flugzeugen werden zunehmend Flüssigkeitskühlsysteme eingesetzt, um an Bord des Flugzeugs vorhandenen Kühlenergieverbrauchern, wie z.B. Lebensmitteln oder wärmeerzeugenden Komponenten Kühlenergie zuzuführen. Aus dem Stand der Technik, beispielsweise der DE 43 403 17 A1 oder der DE 10 2006 005 035 B3 bekannte Flugzeugflüssigkeitskühlsysteme umfassen eine zentrale Kältemaschine, die dazu dient, ein einen Kühlkreislauf durchströmendes Kälteträgermedium auf eine vorbestimmte Kälteträgermediumvorlauftemperatur abzukühlen. Der von dem Kälteträgermedium durchströmte Kühlkreislauf kann direkt oder lediglich thermisch, beispielsweise über einen Wärmetauscher, mit einem internen Kühlkreislauf der Kältemaschine gekoppelt sein. Über den Kühlkreislauf wird das von der Kältemaschine gekühlte Kälteträgermedium einer Mehrzahl von Verbrauchern an Bord des Flugzeugs, wie z.B. Lebensmitteln oder elektrischen, elektronischen oder mechanischen wärmeerzeugenden Komponenten zugeführt. Der Kühlenergietransfer von dem den Kühlkreislauf durchströmenden Kälteträgermedium auf die Kühlenergieverbraucher erfolgt in der Regel über entsprechende, den einzelnen Kühlenergieverbrauchern zugeordnete Wärmetauscher.

Dokument US 2009/090116 A1 offenbart ein Kühlsystem für Industrieanlagen, das eine Kältemaschine 100 sowie über einen Wärmetauscher HX mit der Kältemaschine 100 gekoppelte Kühlkreisläufe 102, 104 und 106 aufweist. In den Kühlkreisläufen 102, 104, 106 ist jeweils ein innerer Kühlkreislauf 24 vorgesehen, der einen jeweiligen Kühlenergieverbraucher 80 mit Kühlenergie aus dem inneren Kreislauf versorgt. Der Wärmetauscher HX wird von Kühlflüssigkeit mit einer konstanten Temperatur von 40°F durchströmt, wobei die Kühlflüssigkeit der Kühlkreisläufe 102, 104 und 106 auf eine konstante Temperatur von 60°F gekühlt ist.

Dokument US 2005/210910 A1 beschreibt ein System zur Kühlung von Nahrungsmittelbehältern in einer Flugzeugbordküche. Das System weist eine Steuerung 232 auf, welche ein Gebläse 190 einer Bordküchenkühlungseinheit 182 an- oder ausschaltet. Dokument WO 2005/063578 A1 betrifft eine Flugzeugklimaanlage, die die Temperatur von Einblasluft für jede von mehreren Kabinenzonen abhängig von der Abweichung einer tatsächlichen Einblastemperatur in Bezug auf einen optimalen Einblastemperaturwert steuert.

Der Kühlbedarf der an Bord eines Flugzeugs vorhandenen Kühlenergieverbraucher hängt stark von den Umgebungsbedingungen ab, denen die Kühlenergieverbraucher ausgesetzt sind. Insbesondere ist der Kühlenergiebedarf der an Bord eines Flugzeugs vorhandenen Kühlenergieverbraucher im Bodenbetrieb des Flugzeugs erheblich größer als im Flugbetrieb des Flugzeugs. Um auch im Bodenbetrieb des Flugzeugs eine ordnungsgemäße Kühlung aller Kühlenergieverbraucher an Bord des Flugzeugs zu gewährleisten, müssen Flugzeugflüssigkeitskühlsysteme so ausgelegt sein, dass sie auch den maximalen Kühlenergiebedarf der Kühlenergieverbraucher im Bodenbetrieb des Flugzeugs sicher decken können. Dies wird derzeit dadurch sichergestellt, dass die Kältemaschine eines Flugzeugflüssigkeitskühlsystems während der gesamten Betriebszeit des Flugzeugflüssigkeitskühlsystems, d.h. sowohl im Bodenbetrieb als auch im Flugbetrieb des Flugzeugs, Kälteträgermedium mit einer konstanten Kälteträgermediumvorlauftemperatur von ca. -9° C bereitstellt.

Da der Kühlenergiebedarf der Kühlenergieverbrauch an Bord eines Flugzeugs im Flugbetrieb des Flugzeugs deutlich geringer ist als im Bodenbetrieb des Flugzeugs, führt der Betrieb eines Flugzeugflüssigkeitskühlsystems mit einer an den Bodenbetriebsfall angepassten konstanten Kälteträgermediumvorlauftemperatur im Flugbetrieb des Flugzeugs zwangsläufig zu Kühlenergieüberkapazitäten an den Kühlenergieverbrauchern. Um eine übermäßige Kühlenergiezufuhr zu den Kühlenergieverbrauchern zu vermeiden, wird daher im Flugbetrieb des Flugzeugs der Kälteträgermediumvolumenstrom zu den Kühlenergieverbrauchern durch Schließen entsprechender, den einzelnen Kühlenergieverbrauchern zugeordneter Verbrauchersteuerventile verringert.

Der gravierende Kühlbedarfsunterschied zwischen dem Bodenbetrieb und dem Flugbetrieb des Flugzeugs führt jedoch dazu, dass das Steuerverhalten der Verbrauchersteuerventile aufgrund des großen notwendigen Proportionalbereichs im Flugbetrieb des Flugzeugs nicht mehr kontinuierlich ist. Stattdessen kann es erforderlich sein, die Verbrauchersteuerventile dauerhaft zwischen Ventilstellungen zu takten, bei denen die Verbrauchersteuerventile zwischen 0 und 20 % ihres maximalen Strömungsquerschnitts freigeben. Ein derartiger diskontinuierlicher Ventilbetrieb kann sich negativ auf die Lebensdauer der Verbrauchersteuerventile auswirken und den Betrieb der Kühlenergieverbraucher sowie der Kältemaschine des Flugzeugflüssigkeitskühlsystems beeinträchtigen. Darüber hinaus arbeitet die Kältemaschine des Flugzeugflüssigkeitskühlsystems im Flugbetrieb des Flugzeugs in einem energetisch ungünstigen Bereich.

Schließlich führt die niedrige Kälteträgermediumvorlauftemperatur im Flugbetrieb des Flugzeugs zu einer Vereisung der mit dem Kühlkreislauf des Flugzeugflüssigkeitssystems gekoppelten, den einzelnen Kühlenergieverbrauchern zugeordneten Wärmetauscher. Daher ist es erforderlich, die Wärmetauscher in vorbestimmten Zeitabständen von ca. 30 Minuten zu enteisen. Während der Enteisungszyklen benötigen die Kühlenergieverbraucher zusätzliche Energie für den Enteisungsvorgang. Ferner muss zum effektiven Drainieren eines Wärmetauschers während des Enteisens die Drehrichtung eines dem Wärmetauscher zugeordneten Ventilators, der im Normalbetrieb des Wärmetauschers durch Kühlenergietransfer von dem den Wärmetauscher durchströmenden Kälteträgermedium zu kühlende Luft durch den Wärmetauscher fördert, umgekehrt und ein optimiertes Ventilatorlauf- und -stillstandsprofil gefahren werden. Die damit verbundenen relativ schnellen Drehzahländerungen sind jedoch im Passagierbereich des Flugzeugs in unerwünschter Weise hörbar.

Der Erfindung liegt die Aufgabe zugrunde, ein Verfahren zum Betreiben eines Flugzeugkühlsystems sowie ein Flugzeugkühlsystem anzugeben, die einen kühlenergiebedarfsgerechten Betrieb des Flugzeugkühlsystems ermöglichen.

Zur Lösung dieser Aufgabe wird bei einem erfindungsgemäßen Verfahren zum Betreiben eines Flugzeugkühlsystems ein Kälteträgermedium durch einen Kühlkreislauf geleitet, der mit einer Kältemaschine sowie mindestens einem Kühlenergieverbraucher gekoppelt ist, um dem Kühlenergieverbraucher von der Kältemaschine abgekühltes Kälteträgermedium zuzuführen. Die Kältemaschine kann eine zentrale Kältemaschine sein, die über den Kühlkreislauf eine Mehrzahl von Kühlenergieverbrauchern mit abgekühltem Kälteträgermedium versorgt. Der Kühlenergietransfer von dem Kühlkreislauf auf den mindestens einen Kühlenergieverbraucher kann beispielsweise mittels eines entsprechenden, dem Kühlenergieverbraucher zugeordneten Wärmetauschers erfolgen. Als Kälteträgermedium kommt vorzugsweise ein Flüssigkeitskälteträgermedium, wie zum Beispiel Wasser, Galden^{®} oder dergleichen zum Einsatz.

Der Betrieb der Kältemaschine wird durch eine Steuereinheit derart gesteuert, dass dem Kühlenergieverbraucher von der Kältemaschine auf eine vorbestimmte Kälteträgermediumvorlauftemperatur abgekühltes Kälteträgermedium zugeführt wird. Mit anderen Worten, unter der Steuerung der Steuereinheit liefert die Kältemaschine auf eine vorbestimmte Kälteträgermediumvorlauftemperatur abgekühltes Kälteträgermedium an den Kühlkreislauf und über den Kühlkreislauf an den Kühlenergieverbraucher. Die Steuereinheit kann beispielsweise in Form einer elektronischen Steuereinheit ausgeführt sein.

Ferner wird bei dem erfindungsgemäßen Verfahren zum Betreiben eines Flugzeugkühlsystems ein Kühlenergiebedarf des mindestens einen Kühlenergieverbrauchers erfasst und ein für den Kühlenergiebedarf des Kühlenergieverbrauchers charakteristisches Signal an die den Betrieb der Kältemaschine steuernde Steuereinheit übermittelt. Der Betrieb der Kältemaschine wird dann auf der Grundlage dieses Signals durch die Steuereinheit derart gesteuert, dass das durch den Kühlkreislauf geleitete Kälteträgermedium von der Kältemaschine auf eine an den Kühlenergiebedarf des Kühlenergieverbrauchers angepasste Kälteträgermediumvorlauftemperatur abgekühlt wird.

Bei dem erfindungsgemäßen Verfahren zum Betreiben eines Flugzeugkühlsystems wird gewährleistet, dass dem Kühlenergieverbraucher in allen Betriebszuständen des Kühlsystems, d.h. sowohl im Bodenbetriebsfall als auch im Flugbetriebsfall, stets Kälteträgermedium mit einer an den Kühlenergiebedarf des Kühlenergieverbrauchers angepassten Kälteträgermediumvorlauftemperatur zugeführt wird, wodurch sichergestellt wird, dass der Kühlenergieverbraucher in allen Betriebssituationen mit ausreichend Kühlenergie versorgt wird. Wenn die Kältemaschine in Form einer zentralen Kältemaschine ausgeführt ist, die über den Kühlkreislauf eine Mehrzahl von Kühlenergieverbraucher mit Kühlenergie versorgt, wird vorzugsweise der Kühlenergiebedarf aller von der Kältemaschine mit Kühlenergie versorgten Kühlenergieverbraucher erfasst und entsprechende für den Kühlenergiebedarf der Kühlenergieverbraucher charakteristische Signale an die Steuereinheit übermittelt. Die Steuereinheit steuert den Betrieb der Kältemaschine dann derart, dass das durch den Kühlkreislauf geleitete Kälteträgermedium auf eine an den Kühlenergiebedarf aller Kühlenergieverbraucher angepasste Kälteträgermediumvorlauftemperatur abgekühlt wird. Um eine ordnungsgemäße Versorgung aller Kühlenergieverbraucher mit Kühlenergie zu gewährleisten, kann bei der Steuerung des Betriebs der Kältemaschine der Kühlenergieverbraucher mit dem höchsten Kühlenergiebedarf besondere Berücksichtigung finden. Beispielsweise kann die Kälteträgermediumvorlauftemperatur an den Kühlenergiebedarf des Kühlenergieverbrauchs mit dem höchsten Kühlenergiebedarf angepasst werden.

Durch die Anpassung der Kälteträgermediumvorlauftemperatur an den tatsächlichen Kühlenergiebedarf des/der Kühlenergieverbraucher(s) kann ein diskontinuierlicher Betrieb eines/von dem/den Kühlenergieverbraucher(n) zugeordneten Verbrauchersteuerventils/Verbrauchersteuerventilen vermieden werden. Darüber hinaus wird ein energieeffizienterer Betrieb der Kältemaschine ermöglicht. Schließlich kann, zumindest in Betriebsphasen, in denen die Kälteträgermediumvorlauftemperatur durch entsprechende Anpassung an den Kühlenergiebedarf des/der Kühlenergieverbraucher(s) auf ca. -1°C erhöht wird, auf eine Enteisung des/der dem/der Kühlenergieverbraucher zugeordneten Wärmetauscher(s) verzichtet werden, da die erhöhte Kälteträgermediumvorlauftemperatur eine Vereisung des/der Wärmetauscher(s) verhindert.

Dabei wird als das für den Kühlenergiebedarf des Kühlenergieverbrauchers charakteristische Signal ein einen freigegebenen Strömungsquerschnitt eines Verbrauchersteuerventils anzeigendes Signal herangezogen, wobei das Verbrauchersteuerventil die Zufuhr von durch den Kühlkreislauf geleitetem Kälteträgermedium zu dem Kühlenergieverbraucher steuert. Beispielsweise kann das Verbrauchersteuerventil in einer dem Kühlkreislauf mit dem Kühlenergieverbraucher verbindenden Zweigleitung angeordnet sein. Wenn mittels des erfindungsgemäßen Verfahrens mehrere Kühlenergieverbraucher von einer zentralen Kältemaschine mit Kühlenergie versorgt werden, werden bei der Steuerung des Betriebs der Kältemaschine vorzugsweise den freigegebenen Strömungsquerschnitt mehrerer oder aller den einzelnen Kühlenergieverbrauchern zugeordneter Verbrauchersteuerventile anzeigende Signale berücksichtigt. Der freigegebene Strömungsquerschnitt eines/der Verbrauchersteuerventil/Verbrauchersteuerventile wird beim Betreiben eines Flugzeugkühlsystems ohnehin erfasst, um eine ordnungsgemäße Steuerung bzw. Regelung der Kühlenergiezufuhr zu den Kühlenergieverbrauchern zu gewährleisten. Die Durchführung des erfindungsgemäßen Verfahrens unter Verwendung eines einen freigegebenen Strömungsquerschnitt eines Verbrauchersteuerventils anzeigenden Signals als das für den Kühlenergiebedarf des Kühlenergieverbrauchers charakteristische Signal erfordert somit keine zusätzlichen Sensoren und vermeidet dadurch eine Erhöhung der Systemkomplexität sowie des Systemgewichts.

Bei einer bevorzugten Ausführungsform des erfindungsgemäßen Verfahrens zum Betreiben eines Flugzeugkühlsystems wird der Betrieb der Kältemaschine durch die Steuereinheit derart gesteuert, dass die Kälteträgermediumvorlauftemperatur erhöht wird, wenn ein freigegebener Strömungsquerschnitt des Verbrauchersteuerventils einen vorbestimmten unteren Schwellenwert unterschreitet. Alternativ oder zusätzlich dazu kann der Betrieb der Kältemaschine durch die Steuereinheit derart gesteuert werden, dass die Kälteträgermediumvortauftemperatur erhöht wird, wenn ein diskontinuierlicher, d.h. ein getakteter Betrieb des Verbrauchersteuerventils erforderlich ist, um dem Kühlenergieverbraucher einen an den Kühlenergiebedarf des Kühlenergieverbrauchers angepassten Kälteträgermediumvolumenstrom zuzuführen. Durch eine derartige Steuerung des Kältemaschinenbetriebs wird ein diskontinuierlicher, die Lebensdauer des Verbrauchersteuerventils sowie den Betrieb der Kühlenergieverbraucher und der Kältemaschine beeinträchtigender getakteter Verbrauchersteuerventilbetrieb vermieden oder zumindest zeitlich eingeschränkt. Wenn mehrere Kühlenergieverbraucher mittels einer zentralen Kältemaschine mit Kühlenergie versorgt werden, werden vorzugsweise wiederum die freigegebenen Strömungsquerschnitte mehrerer oder aller den einzelnen Kühlenergieverbrauchern zugeordneter Verbrauchersteuerventile bei der Steuerung des Betriebs der Kältemaschine berücksichtigt.

Vorzugsweise wird der Betrieb der Kältemaschine bei dem erfindungsgemäßen Verfahren zum Betreiben eines Flugzeugkühlsystems durch die Steuereinheit derart gesteuert, dass die Kälteträgermediumvorlauftemperatur so lange erhöht wird, bis ein freigegebener Strömungsquerschnitt des Verbrauchersteuerventils einen vorbestimmten oberen Schwellenwert erreicht. Dadurch wird sichergestellt, dass die Kälteträgermediumvorlauftemperatur nicht zu stark erhöht wird bzw. stets eine ordnungsgemäße Versorgung des Kühlenergieverbrauchers mit Kühlenergie gewährleistet ist. Wenn mittels des erfindungsgemäßen Verfahrens zum Betreiben eines Flugzeugkühlsystems mehrere Kühlenergieverbraucher von einer zentralen Kältemaschine mit Kühlenergie versorgt werden, werden wiederum vorzugsweise die freigegebenen Strömungsquerschnitte mehrerer oder aller den einzelnen Kühlenergieverbrauchern zugeordneter Verbrauchersteuerventile bei der Steuerung des Kältemaschinenbetriebs berücksichtigt.

Der obere Schwellenwert des freigegebenen Strömungsquerschnitts des Verbrauchersteuerventils liegt vorzugsweise zwischen ca. 70 und 90 %, insbesondere zwischen ca. 80 und 90 %, und besonders bevorzugt bei ca. 90 % des Maximalströmungsquerschnitts des Verbrauchersteuerventils. Bei diesen großen freigegebenen Strömungsquerschnitten wird gewährleistet, dass ein großer Kälteträgermediumvolumenstrom die Kühlenergieverbraucher erreicht. Die Kälteträgermediumvorlauftemperatur kann dann entsprechend hoch gewählt werden, da bereits der große Kälteträgermediumvolumenstrom eine ausreichende Kühlenergiezufuhr zu dem Kühlenergieverbraucher gewährleistet. Dies ermöglicht einen besonders energieeffizienten Betrieb der Kältemaschine sowie eine deutliche Verringerung der Vereisungsgefahr eines dem Kühlenergieverbraucher zugeordneten Wärmetauschers. Wenn mittels des erfindungsgemäßen Verfahrens zum Betreiben eines Flugzeugkühlsystems mehrere Kühlenergieverbraucher von einer zentralen Kältemaschine mit Kühlenergie versorgt werden, werden bei der Steuerung des Betriebs der Kältemaschinen wiederum vorzugsweise die freigegebenen Strömungsquerschnitte mehrerer oder aller den einzelnen Kühlenergieverbrauchern zugeordneter Verbrauchersteuerventile berücksichtigt.

Bei einer bevorzugten Ausführungsform des erfindungsgemäßen Verfahrens zum Betreiben eines Flugzeugkühlsystems steuert die Steuereinheit den Betrieb der Kältemaschine unter Berücksichtigung einer systemabhängigen Zeitkonstante. Mit anderen Worten, ein von der Steuereinheit ausgegebenes Steuersignal zur Steuerung des Betriebs der Kältemaschine wird durch die systemabhängige Zeitkonstante gedämpft. Dadurch wird ein Schwingen einer von der Steuereinheit angesteuerten Komponente der Kältemaschine unter der Steuerung der Steuereinheit zuverlässig vermieden.

Grundsätzlich kann die Steuereinheit zur Steuerung der Kälteträgermediumvorlauftemperatur den Betrieb mehrerer oder aller Komponenten der Kältemaschine entsprechend steuern. Vorzugsweise steuert die Steuereinheit die Kälteträgermediumvorlauftemperatur jedoch insbesondere durch eine entsprechende Steuerung eines Verdichters der Kältemaschine. Dadurch wird eine vergleichsweise einfache, aber dennoch zuverlässige Steuerung des Kältemaschinenbetriebs ermöglicht.

Ein erfindungsgemäßes Flugzeugkühlsystem umfasst eine Kältemaschine sowie einen mit der Kältemaschine sowie mindestens einem Kühlenergieverbraucher gekoppelten Kühlkreislauf, der im Betrieb des Flugzeugkühlsystems von einem Kälteträgermedium durchströmbar ist, um dem Kühlenergieverbraucher von den Kältemaschine abgekühltes Kälteträgermedium zuzuführen. Die Kältemaschine kann beispielsweise in Form einer zentralen Kältemaschine ausgebildet sein, die mehrere Kühlenergieverbraucher mit Kühlenergie versorgt. In diesem Fall zweigen von dem Kühlkreislauf vorzugsweise mehrere, die einzelnen Kühlenergieverbraucher mit dem Kühlkreislauf verbindende Zweigleitungen ab. Eine Steuereinrichtung des erfindungsgemäßen Flugzeugkühlsystems ist dazu eingerichtet, den Betrieb der Kältemaschine derart zu steuern, dass dem Kühlenergieverbraucher von der Kältemaschine auf eine vorbestimmte Kälteträgermediumvorlauftemperatur abgekühltes Kälteträgermedium zugeführt wird.

Darüber hinaus umfasst das erfindungsgemäße Flugzeugkühlsystem eine Einrichtung zur Erfassung eines Kühlenergiebedarfs des Kühlenergieverbrauchers sowie eine Einrichtung zur Übermittlung eines für den Kühlbedarf des Kühlenergieverbrauchers charakteristischen Signals an die Steuereinheit. Die Einrichtung zur Erfassung eines Kühlenergiebedarfs des Kühlenergieverbrauchers kann beispielsweise ein geeigneter Sensor, wie zum Beispiel ein Temperatursensor sein. Für die Übermittlung eines für den Kühlenergiebedarf des Kühlenergieverbrauchers charakteristischen Signals an die Steuereinheit kann beispielsweise ein Bussystem, insbesondere ein CAN-Bussystem verwendet werden. Die Steuereinrichtung des erfindungsgemäßen Flugzeugkühlsystems ist dazu eingerichtet, den Betrieb der Kältemaschine derart zu steuern, dass das durch den Kühlkreislauf geleitete Kälteträgermedium auf eine an den Kühlenergiebedarf des Kühlenergieverbrauchers angepasste Kälteträgermediumvorlauftemperatur abgekühlt wird. Mit anderen Worten, die Steuereinheit ist dazu eingerichtet, die Kälteträgermediumvorlauftemperatur des den Kühlkreislauf durchströmenden Kälteträgermediums zu variieren und damit an den Kühlenergieverbrauch des Kühlenergieverbrauchers bzw. der Kühlenergieverbraucher anzupassen.

Dabei umfasst das erfindungsgemäße Flugzeugkühlsystem ferner eine Einrichtung zur Erfassung eines freigegebenen Strömungsquerschnitts eines Verbrauchersteuerventils sowie eine Einrichtung zur Übermittlung eines den freigegebenen Strömungsquerschnitt des Verbrauchersteuerventils anzeigenden Signals an die Steuereinheit als das für den Kühlenergiebedarf des Kühlenergieverbrauchers charakteristischen Signals. Das Verbrauchersteuerventil ist vorzugsweise ein Ventil, das die Zufuhr von durch den Kühlkreislauf geleitetem Kälteträgermedium zu dem Kühlenergieverbraucher steuert und kann beispielsweise in einer Zweigleitung angeordnet sein, die den Kühlkreislauf mit dem Kühlenergieverbraucher verbindet. Wenn das erfindungsgemäße Flugzeugkühlsystem eine zentrale Kältemaschine umfasst, die mehrere Kühlenergieverbraucher mit Kühlenergie versorgt, sind vorzugsweise auch mehrere, den einzelnen Kühlenergieverbrauchern zugeordnete Verbrauchersteuerventile sowie entsprechende Einrichtungen zur Erfassung der freigegebenen Strömungsquerschnitte dieser Verbrauchersteuerventile sowie zur Übermittlung von den freigegebenen Strömungsquerschnitten der Ventile anzeigenden Signale an die Steuereinheit vorhanden.

Vorzugsweise ist die Steuereinheit des erfindungsgemäßen Flugzeugkühlsystems dazu eingerichtet, den Betrieb der Kältemaschine derart zu steuern, dass die Kälteträgermediumvorlauftemperatur erhöht wird, wenn ein freigegebener Strömungsquerschnitt des Verbrauchersteuerventils einen vorbestimmten unteren Schwellenwert unterschreitet und/oder wenn ein diskontinuierlicher Betrieb des Verbrauchersteuerventils erforderlich ist, um dem Kühlenergieverbraucher einen an den Kühlenergiebedarf des Kühlenergieverbrauchers angepassten Kälteträgermediumvolumenstrom zuzuführen. Bei einem Flugzeugkühlsystem mit einer zentralen Kältemaschine sowie mehreren von der zentralen Kältemaschine mit Kühlenergie versorgten Kühlenergieverbraucher ist die Steuereinheit vorzugsweise dazu eingerichtet, den freigegebenen Strömungsquerschnitt bzw. die Betriebsart mehrerer oder aller Verbrauchersteuerventile des Flugzeugkühlsystems bei der Steuerung der Kältemaschine zu berücksichtigen.

Bei einer bevorzugten Ausführungsform des erfindungsgemäßen Flugzeugkühlsystems ist die Steuereinheit ferner dazu eingerichtet, den Betrieb der Kältemaschine derart zu steuern, dass die Kälteträgermediumvorlauftemperatur solange erhöht wird, bis ein freigegebener Strömungsquerschnitt des Verbrauchersteuerventils einen vorbestimmten oberen Schwellenwert erreicht. Wenn das erfindungsgemäße Flugzeugkühlsystem eine zentrale Kältemaschine sowie mehrere von der zentralen Kältemaschine mit Kühlenergie versorgte Kühlenergieverbraucher erreicht, ist die Steuereinheit wiederum vorzugsweise dazu eingerichtet, die Strömungsquerschnitte mehrerer oder aller Verbrauchersteuerventile des Flugzeugkühlsystems bei der Steuerung des Kältemaschinenbetriebs zu berücksichtigen.

Der oberen Schwellenwert des freigegebenen Strömungsquerschnitts des Verbrauchersteuerventils liegt vorzugsweise zwischen ca. 70 und ca. 90 %, insbesondere zwischen ca. 80 % und ca. 90 % und insbesondere bevorzugt bei ca. 90 % des maximalen Strömungsquerschnitts des Verbrauchersteuerventils.

Vorzugsweise ist die Steuereinheit des erfindungsgemäßen Flugzeugkühlsystems ferner dazu eingerichtet, den Betrieb der Kältemaschine unter Berücksichtigung einer systemabhängigen Zeitkonstante zu steuern. Die systemabhängige Zeitkonstante dämpft das von der Steuereinheit an eine oder mehrere Komponente(n) der Kältemaschine zur Steuerung des Kältemaschinenbetriebs ausgegebenen Steuersignal und verhindert somit ein Schwingen der von der Steuereinheit angesteuerten Komponente(n) der Kältemaschine.

Bei einer bevorzugten Ausführungsform des erfindungsgemäßen Flugzeugkühlsystems ist die Steuereinheit insbesondere dazu eingerichtet, zur Steuerung der Kälteträgermediumvorlauftemperatur des durch den Kühlkreislauf geleiteten Kälteträgermediums den Betrieb eines Verdichters der Kältemaschine zu steuern.

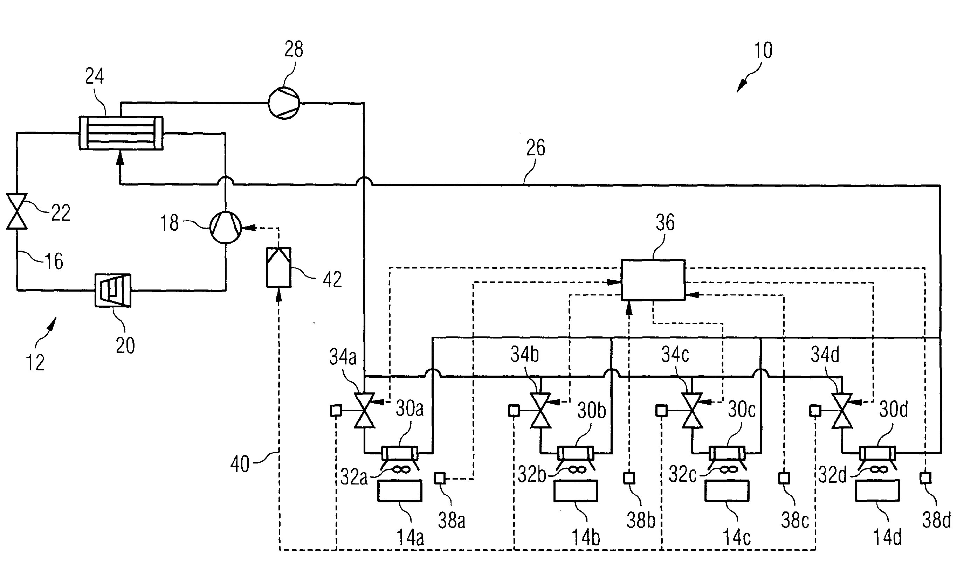

Eine bevorzugte Ausführungsform der Erfindung wird nun anhand der beigefügten Zeichnung näher erläutert, die ein schematisches Übersichtsdiagramm eines Flugzeugkühlsystems zeigt.

Ein in der Figur gezeigtes Flugzeugkühlsystem 10 umfasst eine zentrale Kältemaschine 12, die eine Mehrzahl von Kühlenergieverbrauchern 14a-14d mit Kühlenergie versorgt. Die Kältemaschine 12 weist einen internen Kühlkreislauf 16 auf, in dem ein Verdichter 18, ein Verflüssiger 20, ein Expansionsventil 22, sowie ein Verdampfer 24 angeordnet sind.

Über den beispielsweise in Form eines Wärmetauschers ausgebildeten Verdampfer 24 ist der interne Kühlkreislauf 16 der Kältemaschine 12 thermisch mit einem Kühlkreislauf 26 des Flugzeugkühlsystems 10 verbunden. Der Kühlkreislauf 26 wird von einem flüssigen Kälteträgermedium, beispielsweise Wasser, Galden^{®} oder einem anderen geeigneten Kälteträgermedium durchströmt. Zur Förderung des flüssigen Kälteträgermediums durch den Kühlkreislauf 26 ist in dem Kühlkreislauf 26 stromabwärts der Kopplung des Kühlkreislaufs 26 mit dem internen Kühlkreislauf 16 der Kältemaschine 12 eine Pumpe 28 angeordnet.

Der Kühlenergietransfer von dem Kühlkreislauf 26 auf die Kühlenergieverbraucher 14a-14d erfolgt mittels den einzelnen Kühlenergieverbrauchern 14a-14d zugeordneter Wärmetauscher 30a-30d. Die in dem Kühlkreislauf 26 angeordneten Wärmetauscher 30a-30d werden von dem durch den Kühlkreislauf 26 geleiteten Kälteträgermedium durchströmt und geben dabei Kühlenergie an einen Luftstrom ab, der durch den einzelnen Wärmetauschern 30a-30d zugeordnete Ventilatoren 32a-32d durch die Wärmetauscher 30a-30d und schließlich zu den Kühlenergieverbrauchern 14a-14d gefördert wird.

Zur Steuerung des den Wärmetauschern 30a-30d und folglich den Kühlenergieverbrauchern 14a-14d zugeführten Kälteträgermediumvolumenstroms sind den Wärmetauschern 30a-30d und damit den Kühlenergieverbrauchern 14a-14d jeweils entsprechende Verbrauchersteuerventile 34a-34d zugeordnet. Die Verbrauchersteuerventile 34a-34d sind beispielsweise als Magnetventile mit einem stufenlos variierbaren Strömungsquerschnitt ausgeführt. Der Betrieb der Verbrauchersteuerventile 34a-34d, d.h. ein freigegebener Strömungsquerschnitt der Verbrauchersteuerventile 34a-34d wird von einer ersten Steuereinheit 36 anhand von Signalen gesteuert, die der Steuereinheit 36 von den einzelnen Kühlenergieverbrauchern 14a-14d zugeordneten Sensoren 38a-38d übermittelt werden, und die für den Kühlenergiebedarf der Kühlenergieverbraucher 14a-14d charakteristisch sind. Die Sensoren 38a-38d können beispielsweise als Temperatursensoren ausgeführt sein.

Die erste Steuereinheit 36 steuert den Betrieb, d.h. den freigegebenen Strömungsquerschnitt der Verbrauchersteuerventile 34a-34d in Abhängigkeit des Kühlenergiebedarfs der Kühlenergieverbraucher 14a-14d. Insbesondere steuert die erste Steuereinheit 36 die Verbrauchersteuerventile 34a-34d derart, dass sie einen großen Strömungsquerschnitt freigeben, wenn die Sensoren 38a-38d einen großen Kühlenergiebedarf der Kühlenergieverbraucher 14a-14d anzeigen und dass sie einen kleinen Strömungsquerschnitt freigeben, wenn die Sensoren 38a-38d einen geringen Kühlenergiebedarf der Kühlenergieverbraucher 14a-14d anzeigt. Mit anderen Worten, mittels der Verbrauchersteuerventile 34a-34d kann der Kälteträgermediumvolumenstrom und damit die Menge der den Kühlenergieverbrauchern 14a-14d zugeführten Kühlenergie wie gewünscht gesteuert werden. Dadurch wird stets eine ausreichende Versorgung der Kühlenergieverbraucher 14a-14d mit Kühlenergie gewährleistet.

Ein den freigegebenen Strömungsquerschnitt der Verbrauchersteuerventile 34a-34d anzeigendes Signal wird über ein CAN-Bussystem 40 einer zweiten Steuereinheit 42 zugeleitet. Die zweite Steuereinheit 42 verarbeitet das den freigegebenen Strömungsquerschnitt der Verbrauchersteuerventile 34-34d anzeigende Signal als für den Kühlenergiebedarf der Kühlenergieverbraucher 14a-14d charakteristisches Signal. Anhand dieses Signals steuert die zweite Steuereinheit 42 den Betrieb der Kältemaschine 12 und insbesondere den Betrieb des Verdichters 18 der Kältemaschine 12 derart, dass das durch den Kühlkreislauf 26 des Flugzeugkühlsystems 10 geleitete Kälteträgermedium durch die Kältemaschine 12 auf eine an den Kühlenergiebedarf der Kühlenergieverbraucher 14a-14d angepasste Kälteträgermediumvorlauftemperatur abgekühlt wird. Mit anderen Worten, die Temperatur des den Kühlkreislauf stromabwärts des Verdampfer 24 der Kältemaschine 12 und stromaufwärts der den einzelnen Kühlenergieverbrauchern 14a-14d zugeordneten Wärmetauscher 30-30d durchströmenden Kälteträgermediums wird an den Kühlenergieverbrauch der Kühlenergieverbraucher 14a-14d angepasst.

Insbesondere steuert die zweite Steuereinheit 42 den Betrieb des Verdichters 18 der Kältemaschine 12 derart, dass die Kälteträgermediumvorlauftemperatur solange erhöht wird, bis ein freigegebener Strömungsquerschnitt der Verbrauchersteuerventile 34a-34d 90 % des maximalen Strömungsquerschnitts der Verbrauchersteuerventile 34a-34d beträgt. Um ein Schwingen des Verdichters 18 der Kältemaschine 12 zu verhindern, wird das von der zweiten Steuereinheit 42 an den Verdichter 18 ausgegebene Steuersignal durch eine systemabhängige Zeitkonstante gedämpft.

In dem gezeigten Ausführungsbeispiel eines Flugzeugkühlsystems 10 werden zwei Steuereinheiten 36, 42 zur Steuerung des Betriebs der Verbrauchersteuerventile 34a-34d sowie des Betriebs der Kältemaschine 12 verwendet. Es versteht sich jedoch, dass das Flugzeugkühlsystem 10 auch lediglich eine Steuereinheit umfassen kann, die sowohl den Betrieb der Verbrauchersteuerventile 34a-34d als auch den Betrieb der Kältemaschine 12, insbesondere den Betrieb des Verdichters 18 der Kältemaschine 12 steuert. Ebenso kann das CAN-Bussystem 40, das zur Übermittlung der den freigegebenen Strömungsquerschnitt der Verbrauchersteuerventile 34a-34d anzeigenden Signale an die zweite Steuereinheit 42 verwendet wird, auch zur Übermittlung der für den Kühlenergiebedarf der Kühlenergieverbraucher 14a-14d charakteristische Signale an die erste Steuereinheit 36 eingesetzt werden.

Ferner können statt der ersten Steuereinheit 36 mehrere, den einzelnen Kühlenergieverbrauchern 14a-14d zugeordnete dezentrale erste Steuereinheiten vorhanden sein, die die Signale von den Sensoren 38a-38d empfangen und die Verbrauchersteuerventile 34a-34d in Abhängigkeit des Kühlenergiebedarfs der Kühlenergieverbraucher 14a-14d auf der Grundlage der den ersten Steuereinheiten von den Sensoren 38a-38d übermittelten Signale steuern. Die freigegebenen Strömungsquerschnitte der Verbrauchersteuerventile 34a-34d anzeigende Signale können dann jeweils von den den einzelnen Kühlenergieverbrauchern 14a-14d zugeordneten dezentralen ersten Steuereinheiten an die zweite Steuereinheit 42 übermittelt werden. Die Übermittlung der Signale von den Sensoren 38a-38d an die dezentralen ersten Steuereinheiten sowie der die freigegebenen Strömungsquerschnitte der Verbrauchersteuerventile 34a-34d anzeigenden Signale von den dezentralen ersten Steuereinheiten an die zweite Steuereinheit 42 kann wiederum über ein CAN-Bussystem, bei Bedarf jedoch auch über zwei separate CAN-Bussysteme erfolgen.

## Patentansprüche

1. Verfahren zum Betreiben eines Flugzeugkühlsystems (10) mit den Schritten:
- Leiten eines Kälteträgermediums durch einen Kühlkreislauf (26), der mit einer Kältemaschine (12) sowie mindestens einem Kühlenergieverbraucher (14a-14d) gekoppelt ist, um dem Kühlenergieverbraucher (14a-14d) von der Kältemaschine (12) abgekühltes Kälteträgermedium zuzuführen, und
- Steuern des Betriebs der Kältemaschine (12) durch eine Steuereinheit (42) derart, dass dem Kühlenergieverbraucher (14a-14d) von der Kältemaschine (12) auf eine vorbestimmte Kälteträgermediumvorlauftemperatur abgekühltes Kälteträgermedium zugeführt wird,
- Erfassen eines Kühlenergiebedarfs des Kühlenergieverbrauchers (14a-14d),
- Übermitteln eines für den Kühlenergiebedarf des Kühlenergieverbrauchers (14a-14d) charakteristischen Signals an die Steuereinheit (42) und
- Steuern des Betriebs der Kältemaschine (12) durch die Steuereinheit (42) derart, dass das durch den Kühlkreislauf (26) geleitete Kälteträgermedium auf eine an den Kühlenergiebedarf des Kühlenergieverbrauchers (14a-14d) angepasste Kälteträgermediumvorlauftemperatur abgekühlt wird,
wobei ein Verbrauchersteuerventil die Zufuhr von den Kühlkreislauf durchströmendem Kälteträgermedium zu dem Kühlenergieverbraucher steuert, dadurch gekennzeichent, dass als das für den Kühlenergiebedarf des Kühlenergieverbrauchers (14a-14d) charakteristische Signal ein einen freigegebenen Strömungsquerschnitt des Verbrauchersteuerventils (34a-34d) anzeigendes Signal herangezogen wird.

2. Verfahren nach Anspruch 1,
**dadurch gekennzeichnet, dass** der Betrieb der Kältemaschine (12) durch die Steuereinheit (42) derart gesteuert wird, dass die Kälteträgermediumvorlauftemperatur erhöht wird, wenn ein freigegebener Strömungsquerschnitt des Verbrauchersteuerventils (34a-34d) einen vorbestimmten unteren Schwellenwert unterschreitet und/oder wenn ein diskontinuierlicher Betrieb des Verbrauchersteuerventils (34a-34d) erforderlich ist, um dem Kühlenergieverbraucher (14a-14d) einen an den Kühlenergiebedarf des Kühlenergieverbrauchers (14a-14d) angepassten Kälteträgermediumvolumenstrom zuzuführen.

3. Verfahren nach Anspruch 1 oder 2,
**dadurch gekennzeichnet, dass** der Betrieb der Kältemaschine (12) durch die Steuereinheit (42) derart gesteuert wird, dass die Kälteträgermediumvorlauftemperatur solange erhöht wird, bis ein freigegebener Strömungsquerschnitt des Verbrauchersteuerventils (34a-34d) einen vorbestimmten oberen Schwellenwert erreicht.

4. Verfahren nach Anspruch 3,
**dadurch gekennzeichnet, dass** der obere Schwellenwert des freigegebenen Strömungsquerschnitts des Verbrauchersteuerventils (34a-34d) 90 % des maximalen Strömungsquerschnitts des Verbrauchersteuerventils (34a-34d) beträgt.

5. Verfahren nach einem der vorhergehenden Ansprüche,
**dadurch gekennzeichnet, dass** die Steuereinheit (42) den Betrieb der Kältemaschine (12) unter Berücksichtigung einer systemabhängigen Zeitkonstante steuert.

6. Verfahren nach einem der vorhergehenden Ansprüche,
**dadurch gekennzeichnet, dass** die Steuereinheit (42) zur Steuerung der Kälteträgermediumvorlauftemperatur den Betrieb eines Verdichters (18) der Kältemaschine (12) steuert.

7. Flugzeugkühlsystem (10) mit:
- einer Kältemaschine (12),
- einem mit der Kältemaschine (12) sowie mindestens einem Kühlenergieverbraucher (14a-14d) gekoppelten Kühlkreislauf (26), der von einem Kälteträgermedium durchströmbar ist, um dem Kühlenergieverbraucher (14a-14d) von der Kältemaschine (12) abgekühltes Kälteträgermedium zuzuführen,
- einem Verbrauchersteuerventil (34a-34d), das dazu eingerichtet ist, die Zufuhr von den Kühlkreislauf (26) durchströmendem Kälteträgermedium zu dem Kühlenergieverbraucher (14a-14d) zu steuern,
- einer Steuereinheit (42), die dazu eingerichtet ist, den Betrieb der Kältemaschine (12) derart zu steuern, dass dem Kühlenergieverbraucher (14a-14d) von der Kältemaschine (12) auf eine vorbestimmte Kälteträgermediumvorlauftemperatur abgekühltes Kälteträgermedium zugeführt wird,
- einer Einrichtung (34a-34d) zur Erfassung eines Kühlenergiebedarfs des Kühlenergieverbrauchers (14a-14d), und
- einer Einrichtung (40) zur Übermittlung eines für den Kühlenergiebedarf des Kühlenergieverbrauchers (14a-14d) charakteristischen Signals an die Steuereinheit (42),
wobei die Steuereinheit (42) dazu eingerichtet ist, den Betrieb der Kältemaschine (12) derart zu steuern, dass das durch den Kühlkreislauf (26) geleitete Kälteträgermedium auf eine an den Kühlenergiebedarf des Kühlenergieverbrauchers (14a-14d) angepasste Kälteträgermediumvorlauftemperatur abgekühlt wird, **dadurch gekennzeichnet, dass** die Steuereinheit (42) ferner dazu eingerichtet ist, als das für den Kühlenergiebedarf des Kühlenergieverbrauchers (14a-14d) charakteristische Signal ein einen freigegebenen Strömungsquerschnitts des Verbrauchersteuerventils (34a-34d) anzeigendes Signal heranzuziehen.

8. Flugzeugkühlsystem nach Anspruch 7,
**dadurch gekennzeichnet, dass** die Steuereinheit (42) dazu eingerichtet ist, den Betrieb der Kältemaschine (12) derart zu steuern, dass die Kälteträgermediumvorlauftemperatur erhöht wird, wenn ein freigegebener Strömungsquerschnitt des Verbrauchersteuerventils (14a-14d) einen vorbestimmten unteren Schwellenwert unterschreitet und/oder wenn ein diskontinuierlicher Betrieb des Verbrauchersteuerventils (34a-34d) erforderlich ist, um dem Kühlenergieverbraucher (14a-14d) einen an den Kühlenergiebedarf des Kühlenergieverbrauchers (14a-14d) angepassten Kälteträgermediumvolumenstrom zuzuführen.

9. Flugzeugkühlsystem nach Anspruch 7 oder 8,
**dadurch gekennzeichnet, dass** die Steuereinheit (42) dazu eingerichtet ist, den Betrieb der Kältemaschine (12) derart zu steuern, dass die Kälteträgermediumvorlauftemperatur solange erhöht wird, bis ein freigegebener Strömungsquerschnitt des Verbrauchersteuerventils (34a-34d) einen vorbestimmten oberen Schwellenwert erreicht.

10. Flugzeugkühlsystem nach Anspruch 9,
**dadurch gekennzeichnet, dass** der obere Schwellenwert des freigegebenen Strömungsquerschnitts des Verbrauchersteuerventils (34a-34d) 90 % des maximalen Strömungsquerschnitts des Verbrauchersteuerventils (34a-34d) beträgt.

11. Flugzeugkühlsystem nach einem der Ansprüche 7 bis 10,
**dadurch gekennzeichnet, dass** die Steuereinheit (42) dazu eingerichtet ist, den Betrieb der Kältemaschine 12 unter Berücksichtigung einer systemabhängigen Zeitkonstante zu steuern.

12. Flugzeugkühlsystem nach einem der Ansprüche 7 bis 11,
**dadurch gekennzeichnet, dass** die Steuereinheit (42) dazu eingerichtet ist, zur Steuerung der Kälteträgermediumvorlauftemperatur den Betrieb eines Verdichters (18) der Kältemaschine (12) zu steuern.

## Claims

1. Method for operating an aircraft cooling system (10), comprising the steps:
- guiding a cooling medium through a cooling circuit (26), which is connected to a refrigerating machine (12) and to at least one cooling energy consumer (14a - 14d), to supply cooling medium cooled by the refrigerating machine (12) to the cooling energy consumer (14a - 14d), and
- controlling the operation of the refrigerating machine (12) by a control unit (42) in such a way that cooling medium which is cooled by the refrigerating machine (12) to a predetermined cooling medium flow temperature is supplied to the cooling energy consumer (14a - 14d),
- detecting a cooling energy requirement of the cooling energy consumer (14a-14d),
- transmitting a signal indicative of the cooling energy requirement of the cooling energy consumer (14a - 14d) to the control unit (42), and
- controlling the operation of the refrigerating machine (12) by the control unit, in such a way that cooling medium which is guided through the cooling circuit (26) is cooled to a cooling medium flow temperature which is adapted to the cooling energy requirement of the cooling energy consumer (14a - 14d),
wherein a consumer control valve (34a - 34d) controls the supply of cooling medium which flows through the cooling circuit (26) to the cooling energy consumer (14a - 14d),
**characterized in that** as the signal indicative of the cooling energy requirement of the cooling energy consumer (14a - 14d), a signal which indicates an open flow cross-section of the consumer control valve (34a - 34d) is used.

2. Method according to Claim 1,
**characterized in that** the operation of the refrigerating machine (12) is controlled by the control unit (42) in such a way that the cooling medium flow temperature is increased if an open flow cross-section of the consumer control valve (34a - 34d) falls below a predetermined lower threshold value, and/or if discontinuous operation of the consumer control valve (34a - 34d) is required, in order to supply the cooling energy consumer (14a - 14d) a cooling medium volume flow which is adapted to the cooling energy requirement of the cooling energy consumer (14a - 14d).

3. Method according to Claims 1 or 2,
**characterized in that** the operation of the refrigerating machine (12) is controlled by the control unit (42) in such a way that the cooling medium flow temperature is increased until an open flow cross-section of the consumer control valve (34a - 34d) reaches a predetermined upper threshold value.

4. Method according to Claim 3,
**characterized in that** the upper threshold value of the open flow cross-section of the consumer control valve (34a - 34d) is 90% of the maximum flow cross-section of the consumer control valve (34a - 34d).

5. Method according to any one of the preceding claims,
**characterized in that** the control unit (42) controls the operation of the refrigerating machine (12) taking account of a system-dependent time constant.

6. Method according to any one of the preceding claims,
**characterized in that** the control unit (42), to control the cooling medium flow temperature, controls operation of a compressor (18) of the refrigerating machine (12).

7. Aircraft cooling system (10) with:
- a refrigerating machine (12),
- a cooling circuit (26), which is connected to the refrigerating machine (12) and at least one cooling energy consumer (14a - 14d), and through which a cooling medium can flow, to supply cooling medium cooled by the refrigerating machine (12) to the cooling energy consumer (14a - 14d),
- a consumer control valve (34a - 34d) adapted to control the supply of cooling medium which flows through the cooling circuit (26) to the cooling energy consumer (14a - 14d),
- a control unit (42), which is adapted to control the operation of the refrigerating machine (42) so that cooling medium cooled to a predetermined cooling medium flow temperature is supplied from the refrigerating machine (12) to the cooling energy consumer (14a - 14d),
- a device (34a-34d) for detecting a cooling energy requirement of the cooling energy consumer (14a - 14d), and
- a device (40) for transmitting a signal indicative of the cooling requirement of the cooling energy consumer (14a - 14d) to the control unit (42),
wherein the control unit (42) is adapted to control the operation of the refrigerating machine (12) in such a way that the cooling medium which is guided through the cooling circuit (26) is cooled to a cooling medium flow temperature which is adapted to the cooling energy requirement of the cooling energy consumer (14a - 14d), **characterized in that** the control unit (42) further is adapted to use, as the signal indicative of the cooling energy requirement of the cooling energy consumer (14a - 14d), a signal which indicates an open flow cross-section of the consumer control valve (34a - 34d).

8. Aircraft cooling system according to Claim 7,
**characterized in that** the control unit (42) is adapted to control the operation of the refrigerating machine (12) in such a way that the cooling medium flow temperature is increased if an open flow cross-section of the consumer control valve (14a - 14d) falls below a predetermined lower threshold value, and/or if discontinuous operation of the consumer control valve (34a - 34d) is required, in order to supply to the cooling energy consumer (14a - 14d) a cooling medium volume flow which is adapted to the cooling energy requirement of the cooling energy consumer (14a - 14d).

9. Aircraft cooling system according to Claim 7 or 8,
**characterized in that** the control unit (42) is adapted to control the operation of the refrigerating machine (12) in such a way that the cooling medium flow temperature is increased until a released flow cross-section of the consumer control valve (34a - 34d) reaches a predetermined upper threshold value.

10. Aircraft cooling system according to Claim 9,
**characterized in that** the upper threshold value of the open flow cross-section of the consumer control valve (34a - 34d) is 90% of the maximum flow cross-section of the consumer control valve (34a - 34d).

11. Aircraft cooling system according to any one of Claims 7 to 10,
**characterized in that** the control unit (42) is adapted to control the operation of the refrigerating machine (12) taking account of a system-dependent time constant.

12. Aircraft cooling system according to any one of Claims 7 to 11,
**characterized in that** the control unit (42), to control the cooling medium flow temperature, is adapted to control operation of a compressor (18) of the refrigerating machine (12).

## Revendications

1. Procédé pour faire fonctionner un système de refroidissement d'aéronef (10) comprenant les étapes suivantes :
- la conduite d'un fluide frigorigène à travers un circuit de refroidissement (26) qui est couplé à une machine frigorifique (12) et à au moins un récepteur d'énergie frigorifique (14a à 14d) pour amener au récepteur d'énergie frigorifique (14a à 14d) du fluide frigorigène refroidi par la machine frigorifique (12), et
- la commande du fonctionnement de la machine frigorifique (12) au moyen d'une unité de commande (42) de telle manière que du fluide frigorigène refroidi à une température de départ prédéfinie par la machine frigorifique (12) est acheminé vers le récepteur d'énergie frigorifique (14a à 14d),
- la détection d'un besoin en énergie frigorifique du récepteur d'énergie frigorifique (14a à 14d),
- la transmission à l'unité de commande (42) d'un signal caractéristique du besoin en énergie frigorifique du récepteur d'énergie frigorifique (14a à 14d), et
- la commande du fonctionnement de la machine frigorifique (12) au moyen de l'unité de commande (42) de telle manière que le fluide frigorigène conduit à travers le circuit de refroidissement (26) est refroidi à une température de départ adaptée au besoin en énergie frigorifique du récepteur d'énergie frigorifique (14a à 14d), l'acheminement de fluide frigorigène s'écoulant à travers le circuit de refroidissement vers le récepteur d'énergie frigorifique étant commandé par une soupape de commande de récepteur,
**caractérisé en ce qu'**il est utilisé comme signal caractéristique du besoin en énergie frigorifique du récepteur d'énergie frigorifique (14a à 14d) un signal indiquant une section de passage libérée de la soupape de commande de récepteur (34a à 34d).

2. Procédé selon la revendication 1,
**caractérisé en ce que** l'unité de commande (42) commande le fonctionnement de la machine frigorifique (12) de telle manière que la température de départ du fluide frigorigène augmente lorsqu'une section de passage libérée de la soupape de commande de récepteur (34a à 34d) descend en dessous d'une valeur seuil inférieure prédéterminée et/ou lorsqu'un fonctionnement discontinu de la soupape de commande de récepteur (34a à 34d) s'avère nécessaire pour acheminer vers le récepteur d'énergie frigorifique (14a à 14d) un flux volumique de fluide frigorigène adapté au besoin en énergie frigorifique du récepteur d'énergie frigorifique (14a à 14d).

3. Procédé selon la revendication 1 ou 2,
**caractérisé en ce que** l'unité de commande (42) commande le fonctionnement de la machine frigorifique (12) de telle manière que la température de départ du fluide frigorigène continue d'augmenter jusqu'à ce qu'une section de passage libérée de la soupape de commande de récepteur (34a à 34d) atteigne une valeur seuil supérieure prédéterminée.

4. Procédé selon la revendication 3,
**caractérisé en ce que** la valeur seuil supérieure de la section de passage libérée de la soupape de commande de récepteur (34a à 34d) s'élève à 90 % de la section de passage maximale de la soupape de commande de récepteur (34a à 34d).

5. Procédé selon l'une des revendications précédentes,
**caractérisé en ce que** l'unité de commande (42) commande le fonctionnement de la machine frigorifique (12) compte tenu d'une constante de temps dépendante du système.

6. Procédé selon l'une des revendications précédentes,
**caractérisé en ce que** l'unité de commande (42) commande le fonctionnement d'un compresseur (18) de la machine frigorifique (12) afin de commander la température de départ du fluide frigorigène.

7. Système de refroidissement d'aéronef (10) comprenant :
- une machine frigorifique (12),
- un circuit de refroidissement (26) couplé à la machine frigorifique (12) et à au moins un récepteur d'énergie frigorifique (14a à 14d) et pouvant être traversé par un fluide frigorigène afin d'acheminer vers le récepteur d'énergie frigorifique (14a à 14d). du fluide frigorigène refroidi par la machine frigorifique (12),
- une soupape de commande de récepteur (34a à 34d) qui est conçue pour commander l'acheminement de fluide frigorigène s'écoulant à travers le circuit de refroidissement (26) vers le récepteur d'énergie frigorifique (14a à 14d),
- une unité de commande (42) qui est conçue pour commander le fonctionnement de la machine frigorifique (12) de telle manière qu'un fluide frigorigène refroidi à une température de départ prédéfinie par la machine frigorifique (12) est acheminé vers le récepteur d'énergie frigorifique (14a à 14d),
- un dispositif (34a à 34d) pour détecter un besoin en énergie frigorifique du récepteur d'énergie frigorifique (14a à 14d), et
- un dispositif (40) pour la transmission à l'unité de commande (42) d'un signal caractéristique du besoin en énergie frigorifique du récepteur d'énergie frigorifique (14a à 14d),
l'unité de commande (42) étant conçue pour commander le fonctionnement de la machine frigorifique (12) de telle manière que le fluide frigorigène conduit à travers le circuit de refroidissement (26) est refroidi à une température de départ adaptée au besoin en énergie frigorifique du récepteur d'énergie frigorifique (14a à 14d), **caractérisé en ce que** l'unité de commande (42) est en outre conçue pour utiliser comme signal caractéristique du besoin en énergie frigorifique du récepteur d'énergie frigorifique (14a à 14d) un signal indiquant une section de passage libérée de la soupape de commande de récepteur (34a à 34d).

8. Système de refroidissement d'aéronef selon la revendication 7,
**caractérisé en ce que** l'unité de commande (42) est conçue pour commander le fonctionnement de la machine frigorifique (12) de telle manière que la température de départ du fluide frigorigène augmente de telle manière qu'il y a augmentation de la température de départ du fluide frigorigène lorsqu'une section de passage libérée de la soupape de commande de récepteur (34a à 34d) descend en dessous d'une valeur seuil inférieure prédéterminée et/ou lorsqu'un fonctionnement discontinu de la soupape de commande de récepteur (34a à 34d) s'avère nécessaire pour acheminer vers le récepteur d'énergie frigorifique (14a à 14d) un flux volumique de fluide frigorigène adapté au besoin en énergie frigorifique du récepteur d'énergie frigorifique (14a à 14d).

9. Système de refroidissement d'aéronef selon la revendication 7 ou 8,
**caractérisé en ce que** l'unité de commande (42) est conçue pour commander le fonctionnement de la machine frigorifique (12) de telle manière que la température de départ du fluide frigorigène continue d'augmenter jusqu'à ce qu'une section de passage libérée de la soupape de commande de récepteur (34a à 34d) atteigne une valeur seuil supérieure prédéterminée.

10. Système de refroidissement d'aéronef selon la revendication 9,
**caractérisé en ce que** la valeur seuil supérieure de la section de passage libérée de la soupape de commande de récepteur (34a à 34d) s'élève à 90 % de la section de passage maximale de la soupape de commande de récepteur (34a à 34d).

11. Système de refroidissement d'aéronef selon l'une des revendications 7 à 10,
**caractérisé en ce que** l'unité de commande (42) est conçue pour commander le fonctionnement de la machine frigorifique (12) compte tenu d'une constante de temps dépendante du système.

12. Système de refroidissement d'aéronef selon l'une des revendications 7 à 11,
**caractérisé en ce que** l'unité de commande (42) est conçue pour commander le fonctionnement d'un compresseur (18) de la machine frigorifique (12) afin de commander la température de départ du fluide frigorigène.
